# EUROPEAN PATENT APPLICATION

(11) **EP 3 829 253 A1**
(43) Date of publication of application: **02.06.2021**
(21) Application number: 18929329.3
(22) Date of filing: 07.08.2018
(51) Int. Cl.: H04W 74/08, H04W 72/04, H04B 7/04

(54) **INFORMATION REPORTING METHOD AND APPARATUS, TERMINAL, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gevers Patents
(86) International application number: PCT/CN2018/099247
(87) International publication number: WO 2020/029091

(57) **Abstract**

A method and apparatus for reporting information, a terminal and a storage medium belong to the technical field of communications. The method includes that: in a random access process, a terminal selects a downlink beam(s); the terminal sends a random access request to an access network device through a random access resource associated with the downlink beam(s); and the terminal sends a congestion condition of the downlink beam(s) selected in the random access process to a network. According to the embodiments of the present disclosure, the congestion condition of the downlink beam(s) selected by the terminal in the random access process is reported to the network, which is favorable for the network to check whether a downlink beam is congested, and the network performance is thus improved.

## Description

### TECHNICAL FIELD

The present disclosure relates to the technical field of communications, and more particularly, to a method and apparatus for reporting information, a terminal and a storage medium.

### BACKGROUND

In a 5th-Generation (5G) system (also called a New Radio (NR) system), beam is introduced for data transmission. A terminal may select a downlink beam(s) in a random access process such that an access network device may subsequently send information to the terminal through the downlink beam. If a congestion reporting manner in Long Term Evolution (LTE) is adopted, a terminal may report congestion of a whole cell, and thus a network cannot learn about a congestion condition of beams in the cell, which is unfavorable for accurate troubleshooting of the network.

### SUMMARY

Embodiments of the present disclosure provide a method and apparatus for reporting information, a terminal and a storage medium, which may be adopted to solve the problem that a network cannot learn about a congestion condition of beams in a cell when congestion is reported for the whole cell. The technical solutions are as follows.

According to a first aspect of the embodiments of the present disclosure, a method for reporting information is provided, which may include that:
a terminal selects a downlink beam(s) in a random access process, the downlink beam(s) being a beam(s) adopted by an access network device in a network to send information to the terminal;
the terminal sends a random access request to the access network device through a random access resource associated with the downlink beam(s); and
the terminal sends a congestion condition of the downlink beam(s) selected in the random access process to the network.

Optionally, the terminal may record the congestion condition.
Optionally, the operation that the terminal records the congestion condition may include that:
the terminal records identification information of the downlink beam(s) selected in the random access process and records congestion indication information corresponding to identification information of an ith downlink beam, the congestion indication information indicating whether the ith downlink beam is congested or not and i being a positive integer.

Optionally, a total number of the downlink beam(s) selected by the terminal in the random access process may be n, n being a positive integer; and
the operation that the terminal records the identification information of the downlink beam(s) selected in the random access process may include that:
when n is less than or equal to a preset threshold k, the terminal records identification information of the n downlink beam(s), or
when n is greater than the preset threshold k, the terminal records the identification information of k downlink beams in the n downlink beams.

Optionally, the operation that the terminal records the congestion condition may include that:
the terminal records first information, the first information indicating that each of the downlink beam(s) selected by the terminal in the random access process is congested;
or,
the terminal records second information, the second information indicating that the downlink beam(s) selected by the terminal in the random access process include(s) at least one downlink beam that is not congested.

Optionally, the congestion condition may be sent to the network under a condition that the random access process fails.

Optionally, the random access process may be triggered to be executed in any one of following scenarios: a connection establishment scenario, a connection recovery scenario, a Beam Failure Recovery (BFR) scenario, a Radio Link Failure (RLF) scenario and a connection reestablishment scenario.

Optionally, the method may further include that:
the terminal records signal quality of at least one downlink beam available for the terminal to select in the random access process in a corresponding cell in which the terminal is located; and
the terminal sends the recorded signal quality to the network.

Optionally, the operation that the terminal records the signal quality of the at least one downlink beam available for the terminal to select in the random access process in the corresponding cell may include that:
the terminal records signal quality of the downlink beam(s) selected in the random access process.

Optionally, a total number of the downlink beam(s) selected by the terminal in the random access process may be n, n being a positive integer; and
the operation that the terminal records the signal quality of the at least one downlink beam available for the terminal to select in the random access process in the corresponding cell may include that:
when n is less than or equal to a preset threshold t, the terminal records signal quality of the n downlink beam(s), or
when n is greater than the preset threshold t, the terminal records the signal quality of t downlink beams in the n downlink beams.

Optionally, the method may further include that:
when n is less than the preset threshold t, the terminal records signal quality of first m downlink beam(s) in a sequence from high to low in downlink beams not selected by the terminal in the random access process, m being a positive integer.

Optionally, the method may further include that:
the terminal records a preamble transmission times corresponding to at least one downlink beam(s) selected in the random access process; and
the terminal sends the recorded preamble transmission times to the network.

According to a second aspect of the embodiments of the present disclosure, an apparatus for reporting information is provided, which may be applied to a terminal and include:
a beam selection module, configured to select a downlink beam(s) in a random access process, the downlink beam(s) being a beam(s) adopted by an access network device in a network to send information to the terminal;
a request sending module, configured to send a random access request to the access network device through a random access resource associated with the downlink beam(s); and
an information reporting module, configured to send a congestion condition of the downlink beam(s) selected in the random access process to the network.

Optionally, the apparatus may further include:
a congestion recording module, configured to record the congestion condition.

Optionally, the congestion recording module may be configured to:
record identification information of the downlink beam(s) selected in the random access process and congestion indication information corresponding to identification information of an ith downlink beam, the congestion indication information indicating whether the ith downlink beam is congested or not and i being a positive integer.

Optionally, a total number of the downlink beam(s) selected by the terminal in the random access process may be n, n being a positive integer; and
the congestion recording module may be configured to:
when n is less than or equal to a preset threshold k, record identification information of the n downlink beam(s), or
when n is greater than the preset threshold k, record the identification information of k downlink beams in the n downlink beams.

Optionally, the congestion recording module may be configured to:
record first information, the first information indicating that each of the downlink beam(s) selected by the terminal in the random access process is congested;
or,
record second information, the second information indicating that the downlink beam(s) selected by the terminal in the random access process include(s) at least one downlink beam that is not congested.

Optionally, the congestion condition may be recorded and sent to the network under a condition that the random access process fails.

Optionally, the random access process may be triggered to be executed in any one of following scenarios: a connection establishment scenario, a connection recovery scenario, a BFR scenario, an RLF scenario and a connection reestablishment scenario.

Optionally, the apparatus may further include:
a quality recording module, configured to record signal quality of at least one downlink beam available for the terminal to select in the random access process in a corresponding cell in which the terminal is located; and
the information reporting module may further be configured to send the recorded signal quality to the network.

Optionally, the quality recording module may be configured to:
record signal quality of the downlink beam(s) selected in the random access process.

Optionally, a total number of the downlink beam(s) selected by the terminal in the random access process may be n, n being a positive integer; and
the quality recording module may be configured to:
when n is less than or equal to a preset threshold t, record signal quality of the n downlink beam(s), or
when n is greater than the preset threshold t, record the signal quality of t downlink beams in the n downlink beams.

Optionally, the quality recording module may further be configured to:
when n is less than the preset threshold t, record signal quality of first m downlink beam(s) in a sequence from high to low in downlink beams not selected by the terminal in the random access process, m being a positive integer.

Optionally, the apparatus may further include:
a count recording module, configured to record a preamble transmission times corresponding to at least one downlink beam(s) selected in the random access process; and
the information reporting module may further be configured to send the recorded preamble transmission times to the network.

According to a third aspect of the embodiments of the present disclosure, a terminal is provided, which may include:
a processor;
a memory configured to store one or more instructions executable by the processor,
wherein the processor may be configured to:
select a downlink beam(s) in a random access process, the downlink beam(s) being a beam(s) adopted by an access network device in a network to send information to the terminal;
send a random access request to the access network device through a random access resource associated with the downlink beam(s); and
send a congestion condition of the downlink beam(s) selected in the random access process to the network.

According to a fourth aspect of the embodiments of the present disclosure, a non-transitory computer-readable storage medium is provided, on which a computer program may be stored, wherein the computer program may be executed by a processor to implement the operations of the method in the first aspect.

The technical solutions provided in the embodiments of the present disclosure may have the following beneficial effects.

A congestion condition of downlink beam(s) selected by a terminal in a random access process may be reported to a network, which is favorable for the network to check whether a downlink beam is congested. The network performance is thus improved.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 illustrates a schematic diagram of an application scenario according to an exemplary embodiment.
Fig. 2 illustrates a flowchart of a method for reporting information according to an exemplary embodiment.
Fig. 3 illustrates a block diagram of an apparatus for reporting information according to an exemplary embodiment.
Fig. 4 illustrates a structural schematic diagram of a terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

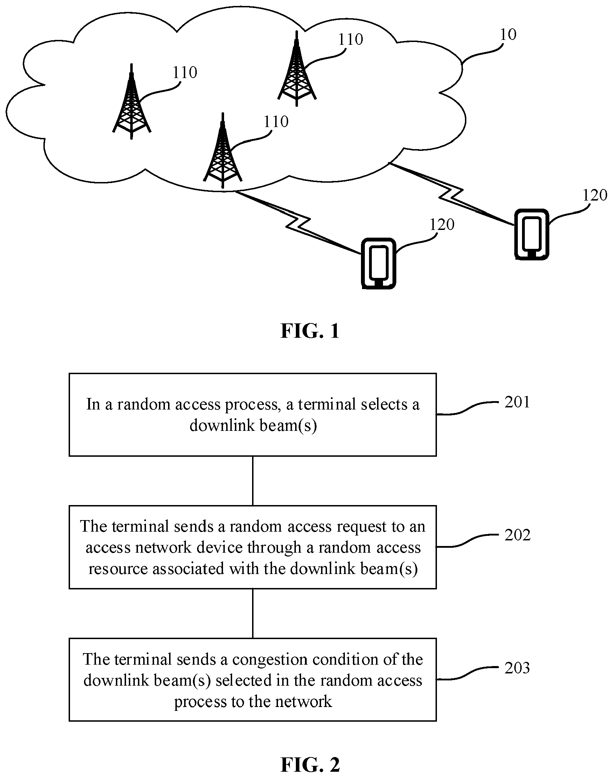

Fig. 1 illustrates a schematic diagram of an application scenario according to an exemplary embodiment. Multiple access network devices 110 and a terminal 120 may be involved in the application scenario. Each access network device 110 is deployed in a Radio Access Network (RAN) 10.

Multiple terminals 120 are provided generally. One or more terminals 120 may be distributed in a cell managed by each access network device 110.

The access network device 110 may communicate with the terminal 120 under an air interface technology, such as a cellular technology. The technical solutions described in the embodiments of the present disclosure may be applied to LTE systems, or may also be applied to evolved systems of the LTE systems, such as LTE-Advanced (LTE-A) systems and 5G systems (also called NR systems).

In the embodiments of the present disclosure, the terms "network" and "system" are used frequently in an alternate form but meanings thereof may be understood by those skilled in the art.

The terminal involved in the embodiments of the present disclosure may include various handheld devices having wireless communication functions, vehicle-mounted devices, wearable devices, computing devices or other processing devices connected to a wireless modem, and various forms of User Equipments (UE), Mobile Stations (MSs), terminal devices, etc. For the ease of description, the above-mentioned devices are all called terminals.

The access network device in a RAN that is involved in the embodiments of the present disclosure may be a base station (BS). The BS is an apparatus deployed in the RAN and configured to provide a wireless communication function for the terminal. The BS may include various forms of macro BSs, micro BSs, relay stations, access points, etc. In systems using different wireless access technologies, devices having BS functions may vary from each other in name. For example, the device is called an evolved NodeB (eNB or eNodeB) in the LTE systems, and called a node B in 3rd Generation (3G) systems. With the evolution of communication technologies, the name of the "BS" may be changed. For the convenience of description, in the embodiments of the present disclosure, the apparatus providing the wireless communication function for the terminal is called the access network device.

Fig. 2 illustrates a flowchart of a method for reporting information according to an exemplary embodiment. The method may be applied to the application scenario shown in Fig. 1. The method may include the following several operations.

In Operation 201, in a random access process, a terminal selects a downlink beam(s).

The random access process is a process required by establishment of a radio link between the terminal and an access network device. A data interaction operation may be normally implemented between the terminal and the access network device only after the random access process is completed. Optionally, a purpose of executing the random access process includes, but not limited to, any one of: uplink synchronization, uplink data sending, downlink data reception, BFR, handover, system message request (for example, on-demand System Information (SI) request) and the like. Optionally, random access may be divided into two manners: contention-based random access and contention-free random access.

In addition, the random access process may be triggered to be executed in any one of the following scenarios: a connection establishment scenario, a connection recovery scenario, a BFR scenario, an RLF scenario and a connection reestablishment scenario, etc. Under the condition that the terminal and the access network device are not connected, the random access process may be triggered to be executed in the connection establishment scenario, the connection recovery scenario or another scenario. Under the condition that the terminal and the access network device are connected, the random access process may be triggered to be executed in the BFR scenario, the RLF scenario, the connection reestablishment scenario or another scenario.

In the random access process, the terminal may select the downlink beam for the access network device. The downlink beam is a beam adopted by the access network device to send information to the terminal. For example, the access network device may send a response message in the random access process to the terminal through the downlink beam(s) selected by the terminal. For another example, after the random access process succeeds, the access network device may send downlink data or another system message to the terminal through the downlink beam(s) selected by the terminal.

In the embodiment of the present disclosure, a manner by which the terminal selects the downlink beam is not limited. For example, the terminal may preferably select a downlink beam(s) with high signal quality from downlink beams available for it to select. In addition, the downlink beam(s) available for the terminal to select may be pre-configured and provided for the terminal before the random access process.

In Operation 202, the terminal sends a random access request to an access network device through a random access resource associated with the downlink beam(s).

The random access resource may include a time-domain resource, a frequency-domain resource, a preamble and the like. The terminal, after selecting the downlink beam(s), may send the random access request to the access network device through the random access resource associated with the selected downlink beam(s).

The random access request is a request sent to the access network device by the terminal in the random access process, and is configured to request for establishment of a radio connection with the access network device. Optionally, the radio connection is a Radio Resource Control (RRC) connection.

In addition, an association relationship between the downlink beam(s) and the random access resource may be pre-configured and provided for the terminal by the network.

In Operation 203, the terminal sends a congestion condition of the downlink beam(s) selected in the random access process to the network.

Optionally, the terminal may record the congestion condition and then send the recorded congestion condition to the network.

In the random access process, the terminal may fail to receive any response message fed back by the access network device due to a congestion of a downlink beam. In such case, the terminal may try to resend the random access request. The terminal, before resending the random access request to the access network device, may reselect a downlink beam(s) and send the random access request to the access network device through a random access resource associated with the reselected downlink beam. Of course, the terminal may also not reselect a downlink beam(s) and still send the random access request to the access network device through the random access resource associated with the downlink beam(s) selected before. Therefore, in the random access process, the terminal may select one or more downlink beams. In a possible implementation mode, the terminal may record a congestion condition of at least one downlink beam selected in the random access process. In another possible implementation mode, the terminal may record congestion conditions of all the downlink beams selected in the random access process.

In the embodiment of the present disclosure, the congestion condition is configured to indicate whether congestion occurs in the downlink beam(s) selected by the terminal. Optionally, after the terminal sends the random access request to the access network device through the random access resource associated with the selected downlink beam, if the terminal does not receive the response message fed back by the access network device, the terminal may determine that there is congestion in the selected downlink beam(s). For example, for contention-based random access, when the terminal does not receive a contention resolution message fed back by the access network device in step 4, the terminal may determine that there is congestion in the selected downlink beam(s). Or, when the contention resolution message fed back by the access network device in Operation 4 indicates a contention resolution failure, the terminal may determine that there is congestion in the selected downlink beam(s). Or, when the terminal does not receive a random access response fed back by the access network device in step 2, the terminal may determine that there is congestion in the selected downlink beam(s).

In an example, the terminal may record and report the congestion condition under a condition that the random access process fails and does not record the congestion condition under a condition that the random access process succeeds. In another example, the terminal may record the congestion condition under the conditions that the random access process fails and succeeds. The terminal may record the congestion condition under the condition that the random access process fails, so that the congestion condition may be reported to the network at proper time to facilitate troubleshooting by the network.

In addition, in the embodiment of the present disclosure, a position where the congestion condition is recorded is not limited. Optionally, when the random access process in the connection establishment scenario or the connection recovery scenario fails, the terminal may record the congestion condition in a first preset variable, for example, the first preset variable may be a VarConnEstFailReport variable. When the random access process in a Master Cell Group (MCG) RLF scenario fails, the terminal may record the congestion condition in a second preset variable, for example, the second preset variable may be a VarRLF-Report variable. When the random access process in a Secondary Cell Group (SCG) RLF or BFR scenario fails, the terminal may directly report the congestion condition to the network through a system message, for example the system message may be an SCG failure information message.

In addition, the terminal may determine whether the random access process fails or not based on whether a timer expires or not. The timer may be triggered when the random access process is started. For example, in the connection establishment scenario, a timer related to the connection establishment scenario may be a T300 timer, and when the T300 timer expires, the terminal may determine that the random access process fails. For another example, in the connection recovery scenario, a timer related to the connection recovery scenario may be a T319 timer, and when the T319 timer expires, the terminal may determine that the random access process fails.

In addition, after the random access process succeeds, the terminal may send recorded information (including the congestion condition of the downlink beam introduced above) to the network. Optionally, the terminal may send the recorded information to the access network device that is presently accessed after random access succeeds. In an example, the terminal may directly send the recorded information to the network after the random access process succeeds. In another example, the terminal may send the recorded information to the network after the random access process succeeds and the network agrees. Optionally, after the random access process succeeds, the terminal may send an information reporting request to the network, the information reporting request being configured to request for sending the information recorded by the terminal to the network. After receiving an acknowledgement indication corresponding to the information reporting request, the terminal may send the recorded information to the network.

To sum up, in the technical solution provided in the embodiment of the present disclosure, a congestion condition of a downlink beam(s) selected by a terminal in a random access process may be reported to a network, which is favorable for the network to check whether a downlink beam is congested. Thus, the network performance is improved.

Several implementation modes of the operation that the terminal records the congestion condition of the downlink beam are introduced and described below.

In a possible implementation mode, the terminal may record identification information of the downlink beam(s) selected in the random access process and record congestion indication information corresponding to identification information of an ith downlink beam, the congestion indication information corresponding to the identification information of the ith downlink beam indicating whether the ith downlink beam is congested or not and i being a positive integer.

Identification information of a downlink beam(s) is configured to uniquely indicate the downlink beam, and different downlink beams correspond to different identification information. Optionally, the identification information of the downlink beam(s) may include a Synchronization Signal and Physical Broadcast Channel (PBCH) block (SSB) index corresponding to the downlink beam. In an example, the terminal may record identification information of at least one downlink beam selected in the random access process. In another example, the terminal may record identification information of all the downlink beams selected in the random access process. When the terminal records the identification information of all the downlink beams recorded in the random access process, after the terminal reports the identification information of all the downlink beams to the network, the network may learn about the specific downlink beam/beams that the terminal have selected and may further determine whether the terminal has selected all proper downlink beams or not, so that the network is helped to accurately locate a cause for fault in the random access process of the terminal to determine a correct solution.

Optionally, the terminal may record the congestion condition of the selected downlink beam(s) in the following manner: the terminal records identification information of each of the selected downlink beam(s) and congestion indication information corresponding to each piece of identification information, for example, referring to the following Table-1.

**Table-1**

| Identification information of downlink beams | Congestion indication information |
|---|---|
| SSB index1 | 1 |
| SSB index2 | 1 |
| SSB index3 | 1 |
| SSB index4 | 1 |
| SSB index5 | 0 |

In Table-1, the congestion indication information of the downlink beams can be represented by 1 or 0, 1 represents that congestion exists, and 0 represents that congestion does not exist.

In addition, in another embodiment, the terminal may also correspondingly record a piece of congestion indication information indicative of congestion for identification information of a downlink beam that is congested in all the selected downlink beams, and/or, correspondingly record a piece of congestion indication information indicative of no congestion for identification information of a downlink beam that is not congested in all the selected downlink beams. Or, the terminal may also record corresponding congestion indication information only for identification information of part of selected downlink beams.

Optionally, an amount limit is made to the amount of pieces of identification information that the terminal may record. For example, there is an amount upper limit, and the upper limit is a preset threshold k. A value of k may be set by the network, or may be specified in a protocol or may also be set by the terminal.

There is made such a hypothesis that the total number of the downlink beam(s) selected by the terminal in the random access process is n, n being a positive integer. When n is less than or equal to the preset threshold k, the terminal records identification information of the n downlink beam(s). When n is greater than the preset threshold k, the terminal records the identification information of k downlink beams in the n downlink beams.

Optionally, the operation that the identification information of the k downlink beams in the n downlink beams is recorded may include any one of the following operations: the identification information of k downlink beams that are selected first from the n downlink beams is recorded; the identification information of k downlink beams that are selected last from the n downlink beams is recorded; the identification information of middle k downlink beams in the n downlink beams is recorded; and the identification information of any k downlink beams in the n downlink beams is recorded.

Optionally, the congestion indication information may be represented by 1bit. For example, 1 represents congestion, and 0 represents no congestion. Or, 1 represents no congestion, and 0 represents congestion.

In another possible implementation mode, the terminal may record the congestion condition of the downlink beam(s) selected in the random access process in the following manner: the terminal records first information, the first information indicating that each of the downlink beam(s) selected by the terminal in the random access process is congested; or, the terminal records second information, the second information indicating that the downlink beam(s) selected by the terminal in the random access process include(s) at least one downlink beam that is not congested. The first information and the second information may also be represented by 1bit. For example, the first information is 1 and the second information is 0. Or, the first information is 0 and the second information is 1.

To sum up, the two manners of recording the congestion condition are provided in the embodiment of the present disclosure. In the first manner, the congestion indication information corresponding to the identification information of the downlink beam may be recorded to clearly indicate the congestion conditions of certain downlink beam/beams such that the network may accurately learn about the congestion condition of each downlink beam selected by the terminal in the random access process to accurately locate the cause for the fault in the random access process of the terminal. In the second manner, the first information or the second information may be recorded to represent the congestion condition, so that a smaller amount of information is recorded, and reduction of the reporting traffic overhead is facilitated.

In another optional embodiment provided based on the embodiment shown in Fig. 2 or the abovementioned optional embodiment, the terminal may also record and report the following information: the terminal records signal quality of at least one downlink beam available for the terminal to select in the random access process in a corresponding cell in which the terminal is located, and the terminal sends the recorded signal quality to the network.

The signal quality is one of key parameters capable of representing a wireless signal strength in the network, and is configured to measure a signal strength of a downlink beam. Optionally, the signal quality may include Reference Signal Received Power (RSRP).

Optionally, the operation that the terminal records the signal quality of the at least one downlink beam available for the terminal to select in the random access process in the corresponding cell in which the terminal is located may include that: the terminal records signal quality of the downlink beam(s) selected in the random access process. In an example, the terminal may record signal quality of the at least one downlink beam selected in the random access process. In another example, the terminal may record signal quality of all the downlink beams selected in the random access process. When the terminal records the signal quality of all the downlink beams selected in the random access process, after the terminal reports the information to the network, the network may learn about signal quality conditions of all the downlink beams selected in the random access process, so that the network may learn about a signal quality problem of the cell, and the network performance is improved.

Optionally, the terminal may record the signal quality of the selected downlink beam(s) in any one of the following manners: recording according to a sequence of downlink beams selected in each preamble transmission in the random access process; and recording in a sequence from high to low of the downlink beams.

Optionally, an amount limit is made to the amount of signal quality that the terminal may record. For example, there is an amount upper limit, and the upper limit is a preset threshold t. t may be set by the network, or may be specified in the protocol or may be set by the terminal. In addition, t may be the same as k or may also be different from k.

There is made such a hypothesis that a total number of the downlink beam(s) selected by the terminal in the random access process is n, n being a positive integer. When n is less than or equal to the preset threshold t, the terminal records signal quality of the n downlink beam(s). When n is greater than the preset threshold t, the terminal records the signal quality of t downlink beams in the n downlink beams.

Optionally, the operation that the signal quality of the t downlink beams in the n downlink beams is recorded may include any one of the following operations: the signal quality of t downlink beams that are selected first from the n downlink beams is recorded; the signal quality of t downlink beams that are selected last from the n downlink beams is recorded; the signal quality of middle t downlink beams in the n downlink beams is recorded; and the signal quality of any t downlink beams in the n downlink beams is recorded.

Optionally, when n is less than the preset threshold t, the terminal may also record signal quality of first m downlink beam(s) in a sequence from high to low in downlink beams not selected by the terminal in the random access process, m being a positive integer. Optionally, a value of m is t-n.

In addition, if there is no amount upper limit to the amount of the signal quality that the terminal may record, the terminal may record the signal quality of all the downlink beams in the corresponding cell in which the terminal is located.

After the random access process succeeds, the terminal may also report the recorded signal quality of the downlink beams to the network. A manner for reporting the signal quality may be the same as the manner for reporting the congestion condition introduced above. In addition, the congestion condition and the signal quality may be reported at the same time or at different time. No limits are made thereto in the embodiment of the present disclosure.

To sum up, in the technical solution provided in the embodiment of the present disclosure, a terminal may report signal quality of at least one downlink beam available for the terminal to select in a random access process in a corresponding cell in which the terminal is located to a network such that the network may learn about the signal quality of the downlink beams in the cell.

In another exemplary embodiment, besides recording the congestion condition and signal quality introduced above, the terminal may also record and report a preamble transmission times corresponding to at least one downlink beam selected in the random access process. For example, for each downlink beam selected by the terminal in the random access process, the terminal may record a preamble transmission times corresponding to each downlink beam, and the terminal may send the recorded preamble transmission times to the network. The preamble transmission times corresponding to a certain downlink beam refers to a the number of times of transmission of a random access preamble by a random access resource associated with the downlink beam(s). Similarly, after the random access process succeeds, the terminal may also report the recorded preamble transmission times to the network. A manner for reporting the preamble transmission times may be the same as the manner for reporting the congestion condition introduced above. In addition, the congestion condition, the signal quality and the preamble transmission times may be reported at the same time or at different time. No limits are made thereto in the embodiments of the present disclosure. After the recorded preamble transmission times is reported to the network at proper time, the network may learn about a behavior of the terminal in the random access process, for example, whether the terminal selects another downlink beam instead to initiate random access or not.

The apparatus embodiments of the present disclosure are set forth hereinafter, and may be configured to execute the method embodiments of the present disclosure. The details not disclosed in the apparatus embodiments of the present disclosure may refer to the method embodiments of the present disclosure.

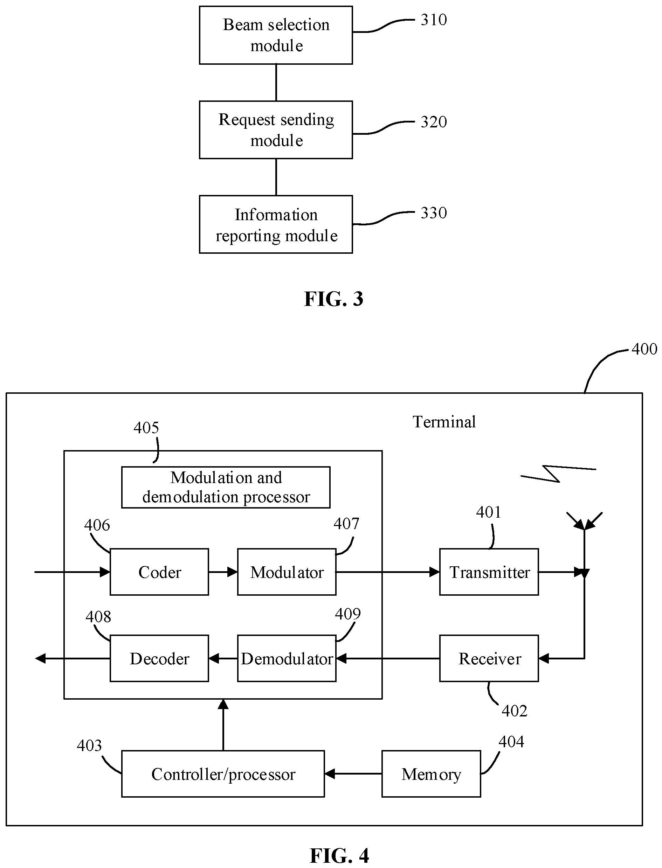

Fig. 3 illustrates a block diagram of an apparatus for reporting information according to an exemplary embodiment. The apparatus has functions for implementing the above method examples. The functions may be implemented by hardware, and may also be implemented by enabling the hardware to execute corresponding software. The apparatus may be applied to the terminal. The apparatus may include: a beam selection module 310, a request sending module 320 and an information reporting module 330.

The beam selection module 310 is configured to, in a random access process, select a downlink beam(s), the downlink beam(s) being a beam(s) adopted by an access network device in a network to send information to the terminal.

The request sending module 320 is configured to send a random access request to the access network device through a random access resource associated with the downlink beam(s).

The information reporting module 330 is configured to send a congestion condition of the downlink beam(s) selected in the random access process to the network.

To sum up, in the technical solution provided in the embodiment of the present disclosure, a congestion condition of a downlink beam(s) selected by a terminal in a random access process may be reported to a network, which is favorable for the network to check whether a downlink beam is congested, and the network performance is thus improved.

In an optional embodiment provided based on the embodiment shown in Fig. 3, the apparatus may further include a congestion recording module (not shown in the figure).

The congestion recording module is configured to record the congestion condition.

Optionally, the congestion recording module may be configured to record identification information of the downlink beam(s) selected in the random access process and records congestion indication information corresponding to identification information of an ith downlink beam, the congestion indication information indicating whether the ith downlink beam is congested or not and i being a positive integer.

Optionally, a total number of the downlink beam(s) selected by the terminal in the random access process may be n, n being a positive integer; and
the congestion recording module is configured to: when n is less than or equal to a preset threshold k, record identification information of the n downlink beam(s); or when n is greater than the preset threshold k, record the identification information of k downlink beams in the n downlink beams.

In another optional embodiment provided based on the embodiment shown in Fig. 3, the congestion recording module is configured to record first information, the first information indicating that each of the downlink beam(s) selected by the terminal in the random access process is congested; or, record second information, the second information indicating that the downlink beam(s) selected by the terminal in the random access process include(s) at least one downlink beam that is not congested.

In another optional embodiment provided based on the embodiment shown in Fig. 3 or the abovementioned optional embodiment, the congestion condition may be sent to the network under a condition that the random access process fails.

In another optional embodiment provided based on the embodiment shown in Fig. 3 or the abovementioned optional embodiment, the random access process may be triggered to be executed in any one of following scenarios: a connection establishment scenario, a connection recovery scenario, a BFR scenario, an RLF scenario and a connection reestablishment scenario.

In another optional embodiment provided based on the embodiment shown in Fig. 3 or the abovementioned optional embodiment, the apparatus may further include a quality recording module (not shown in the figure).

The quality recording module is configured to record signal quality of at least one downlink beam available for the terminal to select in the random access process in a corresponding cell in which the terminal is located.

The information reporting module 330 is further configured to send the recorded signal quality to the network.

Optionally, the quality recording module is configured to record signal quality of the downlink beam(s) selected in the random access process.

In another optional embodiment provided based on the embodiment shown in Fig. 3 or the abovementioned optional embodiment, a total number of the downlink beam(s) selected by the terminal in the random access process is n, n being a positive integer; and
the quality recording module is configured to: when n is less than or equal to a preset threshold t, record signal quality of the n downlink beam(s); or when n is greater than the preset threshold t, record the signal quality of t downlink beams in the n downlink beams.

Optionally, the quality recording module is further configured to, when n is less than the preset threshold t, record signal quality of first m downlink beam(s) in a sequence from high to low in downlink beams not selected by the terminal in the random access process, m being a positive integer.

In another optional embodiment provided based on the embodiment shown in Fig. 3 or the abovementioned optional embodiment, the apparatus may further include a count recording module (not shown in the figure).

The count recording module is configured to record a preamble transmission times corresponding to at least one downlink beam(s) selected in the random access process.

The information reporting module 330 is further configured to send the recorded preamble transmission times to the network.

It is to be noted that when the apparatus provided by the above embodiment implements the functions, the division of the above function modules is merely for the example. In actual applications, the above functions may be completed by different function modules according to actual needs, i.e., the structure of the device is divided into different function modules to complete all or a part of the above-described functions.

For the apparatus in the above embodiments, the specific manner for the operation executed by each module has been described in detail in the embodiments related to the method, and is not elaborated herein.

An exemplary embodiment of the present disclosure also provides a terminal, which may implement the method for reporting the information provided by the present disclosure. The terminal may include: a processor, and a memory configured to store one or more instructions executable by the processor. The processor is configured to:
select a downlink beam(s) in a random access process, the downlink beam(s) being a beam(s) adopted by an access network device in a network to send information to the terminal;
send a random access request to the access network device through a random access resource associated with the downlink beam(s); and
send a congestion condition of the downlink beam(s) selected in the random access process to the network.

Optionally, the processor is further configured to:
record the congestion condition.

Optionally, the processor is further configured to:
record identification information of the downlink beam(s) selected in the random access process and record congestion indication information corresponding to identification information of an ith downlink beam, the congestion indication information indicating whether the ith downlink beam is congested or not and i being a positive integer.

Optionally, a total number of the downlink beam(s) selected by the terminal in the random access process may be n, n being a positive integer; and
the processor is configured to:
when n is less than or equal to a preset threshold k, record identification information of the n downlink beam(s), or
when n is greater than the preset threshold k, record the identification information of k downlink beams in the n downlink beams.

Optionally, the processor is configured to:
record first information, the first information indicating that each of the downlink beam(s) selected by the terminal in the random access process is congested;
or,
record second information, the second information indicating that the downlink beam(s) selected by the terminal in the random access process include(s) at least one downlink beam that is not congested.

Optionally, the congestion condition may be sent to the network under a condition that the random access process fails.

Optionally, the random access process may be triggered to be executed in any one of the following scenarios: a connection establishment scenario, a connection recovery scenario, a BFR scenario, an RLF scenario and a connection reestablishment scenario.

Optionally, the processor is further configured to record signal quality of at least one downlink beam available for the terminal to select in the random access process in a corresponding cell in which the terminal is located and send the recorded signal quality to the network.

Optionally, the processor is configured to:
record signal quality of the downlink beam(s) selected in the random access process.

Optionally, a total number of the downlink beam(s) selected by the terminal in the random access process may be n, n being a positive integer; and
the processor is configured to:
when n is less than or equal to a preset threshold t, record signal quality of the n downlink beam(s), or
when n is greater than the preset threshold t, record the signal quality of t downlink beams in the n downlink beams.

Optionally, the processor is configured to, when n is less than the preset threshold t, record signal quality of first m downlink beam(s) in a sequence from high to low in downlink beams not selected by the terminal in the random access process, m being a positive integer.

Optionally, the processor is further configured to record a preamble transmission times corresponding to at least one downlink beam selected in the random access process and send the recorded preamble transmission times to the network.

The above mainly describes the solutions provided by the embodiments of the present disclosure from the terminal side. It may be understood that for the purpose of implementing the above functions, the terminal includes a corresponding hardware structure and/or software module for executing various functions. The present disclosure may be implemented by hardware or a combination of hardware and computer software in combination with the units and algorithm steps of the various examples described in the embodiments disclosed herein. Whether a certain function is implemented in the form of hardware or in the form of computer software driving hardware depends on the specific applications and design constraint conditions of the technical solutions. Those skilled in the art may implement the described functions by using different methods for each specific application, but this implementation should not be considered beyond the scope of the present disclosure.

Fig. 4 illustrates a structural schematic diagram of a terminal according to an exemplary embodiment.

The terminal 400 may include a transmitter 401, a receiver 402 and a processor 403. The processor 403 may also be a controller, and is represented as the "controller/processor 403" in Fig. 4. Optionally, the terminal 400 may further include a modulation and demodulation processor 405. The modulation and demodulation processor 405 may include an encoder 406, a modulator 407, a decoder 408 and a demodulator 409.

In an example, the transmitter 401 may adjust (for example, analog conversion, filtration, amplification and up-conversion, etc.) an output sample and generate an uplink signal. The uplink signal may be transmitted to an access network device via an antenna. On a downlink, the antenna may receive a downlink signal transmitted by the access network device. The receiver 402 may adjust (for example, filtration, amplification, down-conversion and digitalization, etc.) the signal from the antenna and provide an input sample. In the modulation and demodulation processor 405, the encoder 406 may receive service data and a signaling message to be sent on the uplink, and process (such as formalization, encoding and interleaving) the service data and the signaling message. The modulator 407 may further process (such as symbol mapping and modulation) the encoded service data and signaling message and provide an output sample. The demodulator 409 may process (such as demodulation) the input sample and provide symbol estimation. The decoder 408 may process (such as de-interleaving and decoding) the symbol estimation and provide the decoded data and signaling message sent to the terminal 400. The encoder 406, the modulator 407, the demodulator 409 and the decoder 408 may be implemented by a synthetic modulation and demodulation processor 405. These units are processed according to wireless access technologies (such as LTE and access technologies of other evolved systems) of the wireless access networks. It is to be noted that when the terminal 400 does not include the modulation and demodulation processor 405, the above functions of the modulation and demodulation processor 405 may also be implemented by the processor 403.

The processor 403 may control actions of the terminal 400, and is configured to execute processing operations performed by the terminal 400 in the embodiments of the present disclosure. For example, the processor 403 is further configured to execute the operations of the terminal side in the above method embodiments, and/or other operations of the technical solutions described in the embodiments of the present disclosure.

Further, the terminal 400 may further include a memory 404. The memory 404 is configured to store program codes and data for the terminal 400.

The processor for executing the functions of the terminal in the embodiments of the present disclosure may be a Central Processing Unit (CPU), a universal processor, a Digital Signal Processor (DSP), an Application-Specific Integrated Circuit (ASIC), a Field Programmable Gate Array (FPGA) or another programmable logical device, transistor logical device, hardware component or any combination, and may implement or execute various exemplary logic block diagrams, modules and circuits described in combination with the disclosed contents in the embodiments of the present disclosure. The processor may also be a combination for implementing a computing function, such as a combination including one or more microprocessors, and a combination including a DSP ad a microprocessor.

The operations of the methods or algorithms described in combination with the disclosed contents in the embodiments of the present disclosure may be implemented in a hardware manner, or may also be implemented by the processor instructing a software instruction. The software instruction may be composed of a corresponding software module, and the software module may be stored in a Random Access Memory (RAM), a flash, a Read Only Memory (ROM), an Erasable Programmable ROM (EPROM), an Electrically EPROM (EEPROM), a register, a hard disk, a mobile hard disk, a Compact Disc Read-Only Memory (CD-ROM), or any other form of storage medium known in the art. An exemplary storage medium may be coupled to the processor, such that the processor can read information from the storage medium and write the information to the storage medium. Certainly, the storage medium may also be a constituent part of the processor. The processor and the storage medium may be located in the ASIC. In addition, the ASIC may be located in the terminal. Certainly, the processor and the storage medium may also be taken as discrete components to store in the terminal.

It is appreciated by those skilled in the art that the described functions in the embodiments of the present disclosure may be implemented by hardware, software, firmware or any combination thereof in the above one or more examples. When implemented by using the software, these functions may be stored in a computer-readable medium or transmitted as one or more instructions or codes on the computer-readable medium. The computer-readable medium may include a computer storage medium and a communication medium. The communication medium includes any medium that facilitates the transmission of a computer program from one place to another place. The storage medium may be any available medium that can be accessed by a universal or dedicated computer.

An embodiment of the present disclosure further provides a non-temporary computer-readable storage medium, which stores a computer program; and the computer program is executed by a processor to implement the operations of the method for reporting the information.

It is to be understood that the term "multiple" in the present disclosure refers to more or more than two. The "and/or" is an association relationship for describing associated objects and represents that three relationships may exist. For example, A and/or B may represent the following three cases: only A exists, both A and B exist, and only B exists. The character "/" generally indicates that the related objects are in an "or" relationship.

Other embodiments of the present disclosure will be apparent to those skilled in the art from consideration of the specification and practice of the present disclosure disclosed here. This present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for reporting information, comprising:
selecting, by a terminal, a downlink beam(s) in a random access process, the downlink beam(s) being a beam(s) adopted by an access network device in a network to send information to the terminal;
sending, by the terminal, a random access request to the access network device through a random access resource associated with the downlink beam(s); and
sending, by the terminal, a congestion condition of the downlink beam(s) selected in the random access process to the network.

2. The method of claim 1, further comprising:
recording, by the terminal, the congestion condition.

3. The method of claim 2, wherein recording, by the terminal, the congestion condition comprises:
recording, by the terminal, identification information of the downlink beam(s) selected in the random access process and recording congestion indication information corresponding to identification information of an ith downlink beam, the congestion indication information indicating whether the ith downlink beam is congested or not and i being a positive integer.

4. The method of claim 3, wherein a total number of the downlink beam(s) selected by the terminal in the random access process is n, n being a positive integer; and
recording, by the terminal, the identification information of the downlink beam(s) selected in the random access process comprises:
when n is less than or equal to a preset threshold k, recording, by the terminal, identification information of the n downlink beam(s), or
when n is greater than the preset threshold k, recording, by the terminal, identification information of k downlink beams in the n downlink beams.

5. The method of claim 2, wherein recording, by the terminal, the congestion condition comprises:
recording, by the terminal, first information, the first information indicating that each of the downlink beam(s) selected by the terminal in the random access process is congested; or,
recording, by the terminal, second information, the second information indicating that the downlink beam(s) selected by the terminal in the random access process comprise(s) at least one downlink beam that is not congested.

6. The method of any one of claims 1-5, wherein the congestion condition is sent to the network under a condition that the random access process fails.

7. The method of any one of claims 1-5, wherein the random access process is triggered to be executed in any one of following scenarios: a connection establishment scenario, a connection recovery scenario, a Beam Failure Recovery (BFR) scenario, a Radio Link Failure (RLF) scenario and a connection reestablishment scenario.

8. The method of any one of claims 1-5, further comprising:
recording, by the terminal, signal quality of at least one downlink beam available for the terminal to select in the random access process in a corresponding cell in which the terminal is located; and
sending, by the terminal, the recorded signal quality to the network.

9. The method of claim 8, wherein recording, by the terminal, the signal quality of the at least one downlink beam available for the terminal to select in the random access process in the corresponding cell in which the terminal is located comprises:
recording, by the terminal, signal quality of the downlink beam(s) selected in the random access process.

10. The method of claim 8, wherein a total number of the downlink beam(s) selected by the terminal in the random access process is n, n being a positive integer; and
recording, by the terminal, the signal quality of the at least one downlink beam available for the terminal to select in the random access process in the corresponding cell in which the terminal is located comprises:
when n is less than or equal to a preset threshold t, recording, by the terminal, signal quality of the n downlink beam(s), or
when n is greater than the preset threshold t, recording, by the terminal, the signal quality of t downlink beams in the n downlink beams.

11. The method of claim 10, further comprising:
when n is less than the preset threshold t, recording, by the terminal, signal quality of first m downlink beam(s) in a sequence from high to low in downlink beams not selected by the terminal in the random access process, m being a positive integer.

12. The method of any one of claims 1-5, further comprising:
recording, by the terminal, a preamble transmission times corresponding to at least one downlink beam selected in the random access process; and
sending, by the terminal, the recorded preamble transmission times to the network.

13. An apparatus for reporting information, applicable to a terminal and comprising:
a beam selection module, configured to select a downlink beam(s) in a random access process, the downlink beam(s) being a beam(s) adopted by an access network device in a network to send information to the terminal;
a request sending module, configured to send a random access request to the access network device through a random access resource associated with the downlink beam(s); and
an information reporting module, configured to send a congestion condition of the downlink beam(s) selected in the random access process to the network.

14. The apparatus of claim 13, further comprising:
a congestion recording module, configured to record the congestion condition.

15. The apparatus of claim 14, wherein the congestion recording module is configured to:
record identification information of the downlink beam(s) selected in the random access process and congestion indication information corresponding to identification information of an ith downlink beam, the congestion indication information indicating whether the ith downlink beam is congested or not and i being a positive integer.

16. The apparatus of claim 15, wherein a total number of the downlink beam(s) selected by the terminal in the random access process is n, n being a positive integer; and
the congestion recording module is configured to:
when n is less than or equal to a preset threshold k, record identification information of the n downlink beam(s), and
when n is greater than the preset threshold k, record the identification information of k downlink beams in the n downlink beams.

17. The apparatus of claim 14, wherein the congestion recording module is configured to:
record first information, the first information indicating that each of the downlink beam(s) selected by the terminal in the random access process is congested; or,
record second information, the second information indicating that the downlink beam(s) selected by the terminal in the random access process comprise(s) at least one downlink beam that is not congested.

18. The apparatus of any one of claims 13-17, wherein the congestion condition is sent to the network under a condition that the random access process fails.

19. The apparatus of any one of claims 13-17, wherein the random access process is triggered to be executed in any one of following scenarios: a connection establishment scenario, a connection recovery scenario, a Beam Failure Recovery (BFR) scenario, a Radio Link Failure (RLF) scenario and a connection reestablishment scenario.

20. The apparatus of any one of claims 13-17, further comprising a quality recording module, configured to record signal quality of at least one downlink beam available for the terminal to select in the random access process in a corresponding cell in which the terminal is located, wherein
the information reporting module is further configured to send the recorded signal quality to the network.

21. The apparatus of claim 20, wherein the quality recording module is configured to:
record signal quality of the downlink beam(s) selected in the random access process.

22. The apparatus of claim 20, wherein a total number of the downlink beam(s) selected by the terminal in the random access process is n, n being a positive integer; and
the quality recording module is configured to:
when n is less than or equal to a preset threshold t, record signal quality of the n downlink beam(s), or
when n is greater than the preset threshold t, record the signal quality of t downlink beams in the n downlink beams.

23. The apparatus of claim 22, wherein the quality recording module is further configured to:
when n is less than the preset threshold t, record signal quality of first m downlink beam(s) in a sequence from high to low in downlink beams not selected by the terminal in the random access process, m being a positive integer.

24. The apparatus of any one of claims 13-17, further comprising:
a count recording module, configured to record a preamble transmission times corresponding to at least one downlink beam selected in the random access process,
wherein the information reporting module is further configured to send the recorded preamble transmission times to the network.

25. A terminal, comprising:
a processor;
a memory configured to store one or more instructions executable by the processor,
wherein the processor is configured to:
select a downlink beam(s) in a random access process, the downlink beam(s) being a beam(s) adopted by an access network device in a network to send information to the terminal;
send a random access request to the access network device through a random access resource associated with the downlink beam(s); and
send a congestion condition of the downlink beam(s) selected in the random access process to the network.

26. A non-transitory computer-readable storage medium, storing a computer program that, when executed by a processor, implements the operations of the method of any one of claims 1-12.
